# EUROPEAN PATENT SPECIFICATION

(11) **EP 0 653 752 B1**
(45) Date of publication and mention of the grant of the patent: **10.05.2000**
(21) Application number: 94308358.4
(22) Date of filing: 11.11.1994
(51) Int. Cl.: G11B 19/00, G11B 19/20, G11B 33/12, G05F 1/577

(54) **Dual voltage servo system and method**
Doppelspannungsservosystem und -verfahren
Méthode et système d'asservissement bi-tension

(30) Priority: 15.11.1993 US 152988
(43) Date of publication of application: 17.05.1995
(73) Proprietor: TEAC CORPORATION, Musashino-shi Tokyo (JP); Pont Peripherals Corporation, Sunnyvale, California 94086 (US)
(72) Inventor: Thanos, William N., San Jose, California 95131 (US)
(74) Representative: McLeish, Nicholas Alistair Maxwell

(56) References cited:
- US-A- 4 991 129
- US-A- 5 204 593
- US-A- 5 262 705

## Description

### FIELD OF THE INVENTION

This invention relates to disk drives generally, and particularly relates to servo systems for removable disk drives.

### BACKGROUND OF THE INVENTION

Notebook computers have become commonplace both in the workplace and in the home. However, one difficulty which continues to exist is how to transfer data from a notebook system to a desktop system.

Many users of notebook computers rely on floppy diskettes to transfer their data. However, floppies suffer from a number of limitations including low capacity, low speed and relatively poor reliability. Cable based file transfers are also commonplace, but require the presence of both machines, as well as knowing precisely which files are to be transferred.

Removable disk drives installable in both the portable and the desktop machine offer perhaps the most effective method of transferring data, because it allows users to compactly transport all of their programs and data in exactly the proper arrangement. In this manner no files are forgotten, no directories or partitions have to be relearned, and capacity is comparatively huge.

One problem with removable disk drives is that portable computers typically provide only a five volt supply, which tends to limit the performance of the disk drive when installed in a portable. Desktop machines, on the other hand, provide both five and twelve volt supplies, and users of desktop machines quickly become accustomed to the higher disk performance available with a twelve volt supply. Those skilled in the art will recognize that the voice coil motor used to position the heads over the disk in most modern disk drives offers significantly better performance when driven with a twelve volt supply than with a five volt supply.

As a result, while it is necessary in the current state of the art for a disk drive to function on five volts in the environment of a portable computer, it is highly desirable for the disk drive to function on twelve volts in the environment of a desktop computer.

Although not directed to this problem, US-5,204,593 discloses a drive system including a spindle motor, a voice coil motor, and a power supply monitoring device for monitoring a power supply voltage. The voltages supplied to the motors are controlled based upon the monitored power supply voltage. This allows the drive system to be operable by a power supply having a voltage range of between three and five volts, and reduces the electric power consumed by the drive system.

### SUMMARY OF THE INVENTION

In a first aspect, the present invention provides a hard disk drive data storage system for use with a host computer system, said data storage system comprising at least one rotatable disk upon which data can be stored; a spindle motor coupled to said disk to impart rotation thereto; an actuator including a motor coupled to a set of heads and operable to move said set of heads across said at least one rotatable disk; read/write logic connected to said set of heads for writing to and reading from said at least one disk; a controller coupled to and driving said spindle motor, said actuator, and said read/write logic; and an interface connector including a first power supply line through which said spindle motor and said read/write logic receive power at a first voltage from said host computer system and a second power supply line through which said actuator receives power at a second voltage from said host computer system, said controller includes a voltage adapting circuit coupled to said second power supply line such that said controller is adapted to operate said actuator with a first set of operating parameters if said second voltage matches said first voltage and to operate said actuator with a second set of operating parameters if said second voltage does not match said first voltage.

In a second aspect, the present invention provides a method of transferring data between desktop and portable computer systems using a removable hard disk drive installable in both said desktop and said portable systems to act as an intermediate data store, said disk drive being driven by a power supply of the computer system in which it is installed, and said disk drive determines whether the voltage of said power supply is a typical voltage supplied by a portable system or the higher voltage supply of a desktop system and provides a performance characteristic in accordance therewith.

Embodiments of the present invention resolve the limitations of the prior art by providing a removable disk drive which is capable of determining whether the available supply voltage is twelve volts or five volts, and providing a performance characteristic in accordance therewith.

The performance improvements provided by these embodiments are primarily directed to operation of the actuator in seeking mode which is controlled using gray code information from the servo demodulator. Once the actuator arrives close to the target track, a combination of gray code and fine servo burst positioning information is used to accurately position the actuator on track. To simplify design, in a presently preferred embodiment the read/write logic and spindle driver use only a five volt supply regardless of the availability of twelve volts.

More specifically, a simple voltage sensing circuit determines what the available supply voltage is. If only five volts are present, the micro-controller is set for a moderance performance characteristic, stored in EPROM, and during recalibration the various parameters that primarily determine access time are set to match the five volt supply.

On the other hand, if a twelve volt supply is sensed, the micro-controller selects a higher performance trajectory, also stored in EPROM, and during recalibration sets the various parameters accordingly. The result is that the actuator is driven with larger currents, causing faster response times.

Thus embodiments of the present invention provide a voltage sensing disk drive wherein the actuator may be driven either by five volts or twelve volts.

Embodiments of the present invention also provide a disk drive which provides higher performance when supplied with both twelve and five volts than when supplied with only five volts.

In addition embodiments of the present invention provide a removable disk drive which may be used in either a notebook computer or a desktop computer and automatically provides performance characteristics optimized for the particular environment.

These and other embodiments of the present invention may be better appreciated by the following Detailed Description of the Invention, taken together with the attached Figures.

### BRIEF DESCRIPTION OF THE DRAWINGS

Figure 1 shows in perspective view a removable disk drive embodying the present invention.
Figure 2 shows in simplified schematic diagram form a dual voltage sensing and control circuitry embodying the present invention.
Figure 3 shows in schematic diagram form a more detailed view of the dual voltage sensing and control circuitry.
Figures 4A-F show in detailed schematic block diagram form the dual voltage sensing and control circuitry.

### DETAILED DESCRIPTION OF THE

### PRESENTLY PREFERRED EMBODIMENTS

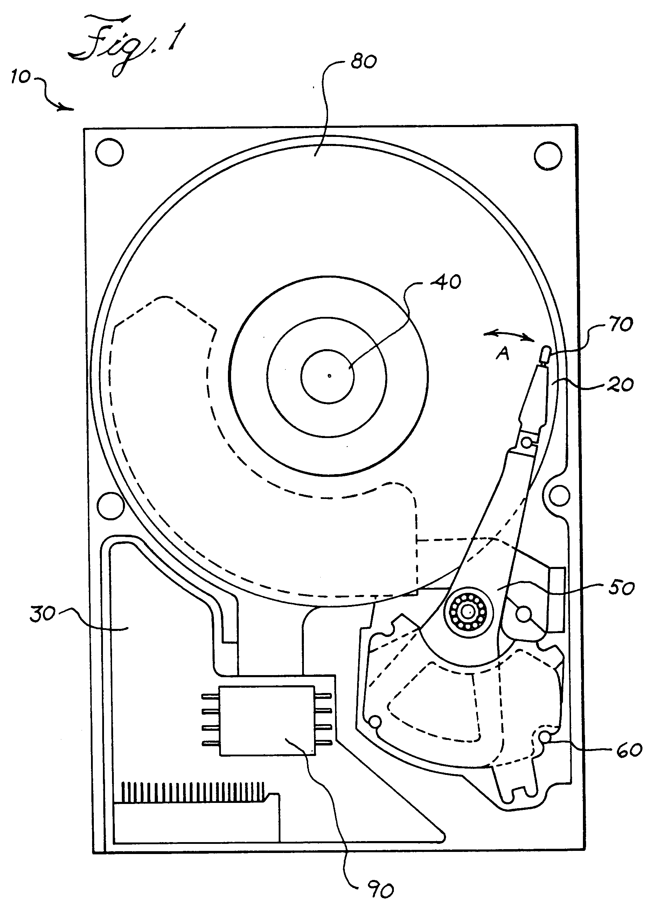

Referring now to Figure 1, a disk drive 10 (of the type shown in U.S. Patent 5,446,609 filed September 24, 1991, entitled High Capacity, Low Profile Disk Drive System and incorporated herein by reference) may be seen to comprise a head and disk assembly 20 together with a controller 30. The controller 30 basically drives a spindle motor 40, an actuator 50 which typically includes a voice coil motor 60 for positioning a set of heads 70 over one or more disks 80, and read/write logic 90 for writing to and reading from the disk(s).

Certain embodiments of the present invention are concerned primarily with apparatus and methods for driving the actuator. More particularly, these embodiments are directed to driving the actuator during seeking with performance characteristics matched to the supply voltage. More specifically, the DAC scaling range is altered depending on the available voltage, and the seek trajectory and servo coefficients are similarly selected based on the available voltage. However, because the disk drive must operate on both five volts and twelve volts, the spindle motor and read/write logic operate using only a five volt supply.

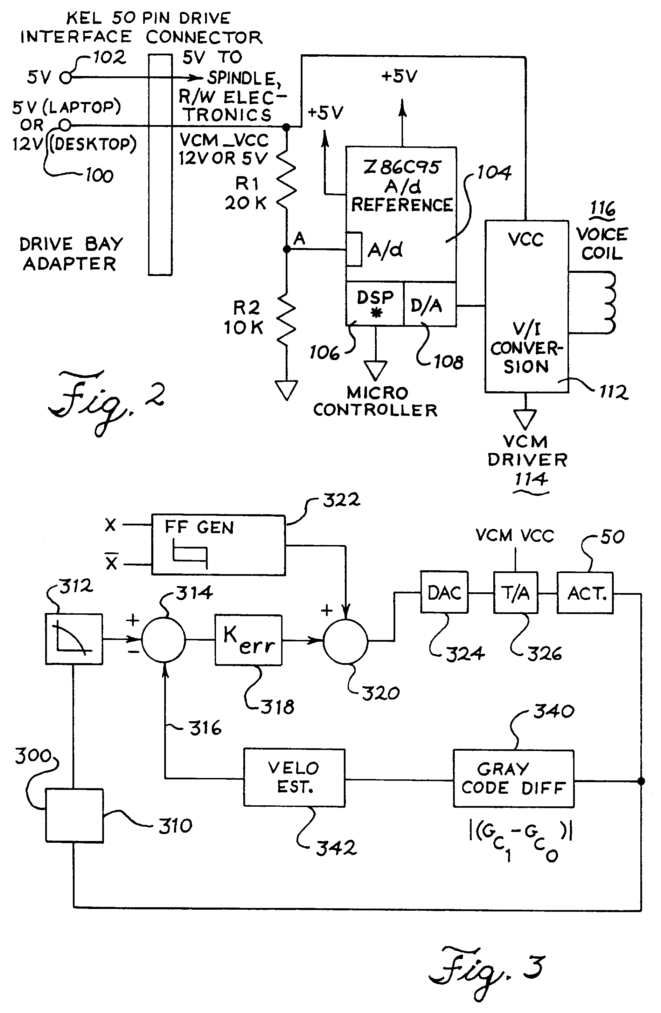

Referring next to Figure 2, which is a simplified schematic of the actuator drive circuitry, supply voltage VCM_VCC is provided by the host system (either a portable or a desktop computer) at line 100. Five volts is supplied at line 102 for use with the rest of the machine. A voltage divider comprised of R1 and R2 serves as a scaling network, with the supply voltage being sensed by an A/D converter 104 connected at point A between the two resistors. The particular values of R1 and R2 are selected to match the input characteristics for the A/D converter 104, which in an exemplary embodiment forms a portion of a Zilog™ Z86C95 microcontroller. Thus, for the A/D converter portion of a Z86C95 where an input of 3.00 volts indicates both twelve and five volt supplies are available while an input of 2.60 volts indicates only a five volt supply is available, the values of R1 and R2 may be 27.4K and 2.0K ohms, respectively.

The voltage sensed by the A/D converter 104 at point A is supplied to a digital signal processor portion 106 of the Z86C95, which sets the scaling of a D/A converter portion 108. Although the particular scaling values are subject to design choices, good success has been achieved in the presently preferred embodiment by choosing a scalar of two for 12 volt operation, and a scalar of one for five volt operation. In addition, the DSP 106 sets a seek trajectory and servo coefficients based on the voltage sensed at the point A, and supplies those parameters to a microcontroller 110.

A voltage to current converter 112, responsive to signals from the D/A converter controls a VCM driver circuit 114. A transconductance amplifier is typically used to control current. The VCM driver circuit is required to work over a relatively wide voltage range, to accommodate both five volt and twelve volt operation, and may for example be an Allegro 8958.

Referring next to Figure 3, the circuitry of Figure 2 may be understood in somewhat greater detail. To assist in understanding the circuitry, a discussion of the key parameters which control access time may be helpful. There are five dominant parameters in the seek operation that substantially control access time. TACH_GAIN is a constant multiplier that determines velocity feedback.

V_LEAD represents a velocity correction factor for the velocity estimator during acceleration, and is typically added to multiple of TACH_GAIN and the absolute value of the gray code difference. V_LAG, or Velocity Lag, represents a velocity correction factor for the velocity estimator during deceleration, and is typically subtracted from the multiple of TACH_GAIN and the absolute value of the gray code difference. FEED_FORWARD represents an anticipated deceleration characteristic. DAC_GAIN represents a programmable characteristic of the Zilog Z86C95 device, which permits scaling depending on whether low vold or high voltage is sensed.

The operation of the controller 30 during seeking initially involves determining a desired tract T_{D} at start point 300. The absolute value of the number of tracks between the existing track and the desired track ("tracks to go") is calculated at 310, and that value is supplied to a velocity table 312. The velocity table 312, which scales its output so that full scale is 90 ips for twelve volts and 53 ips for five volts, outputs a V_{cmd} signal which is summed at 314 with a negative velocity feedback signal 316. The velocity table typically defines a curve where the Y axis represents a velocity command and the X axis represents tracks to go, with the value of X being a maximum at the origin.

The sum of the V_{cmd} signal and the feedback signal 316 is scaled at 318 by a factor Kₑᵣᵣₒᵣ. The value of Kₑᵣᵣₒᵣ is set for two if VCM_VCC is five volts, but set for one if VCM_VCC is twelve volts. The scaled results are then summed at adder 320 with a predicted signal from a feedforward generator 322, and the output is supplied to a DAC 324. The DAC 324 is scaled according to the value of VCM_VCC, with a factor of 0.5 if VCM_VCC is five volts, and a value of one if VCM_VCC is twelve volts. It will be appreciated that the respective values of Kₑᵣᵣₒᵣ and DAC scaling multiply to unity for both values of VCM_VCC.

The output of the DAC is supplied to a transconductance amplifier 326 which is directly connected to VCM_VCC and has a gain of .55 a/v during seeking. In the "on track" mode, the gain of the amplifier 326 is reduced to one-fourth of its gain during seeking. The amplifier 326 drives the actuator 50 so that the heads are moved across the disk.

Gray code feedback 340 is provided from the servo demodulator in the ASIC and the absolute value of the gray code difference supplies the input to the velocity estimating logic 342. The velocity estimating logic 342 provides the velocity feedback signal 316 during both acceleration and deceleration, but difference equations are used to define the signal during the respective stages. During acceleration, the velocity estimate is derived by multiplying a constant, referred to as TACH_GAIN, times the absolute value of the gray code difference, and summing that multiple with the value of V_LEAD. During deceleration, the velocity estimate is the multiple of TACH_GAIN times the absolute value of the gray code difference, minus the value of V_LAG.

For a presently preferred embodiment, TACH_GAIN is set to 9.44 when VCM_VCC is five volts, and is set to 5.5 when VCM_VCC is twelve volts. The velocity estimate signal 316 is then fed back to the summing junction 314, as noted previously. Similarly, position data, X, is fed back to the absolute value adder 310, and the iterative process repeats.

The foregoing values are exemplary only, and apply particularly to a disk configured to have 3300 tpi and a sample rate of 143 microseconds. In such an embodiment, for a VCM_VCC of twelve volts the access time is on the order of eleven milliseconds, while for a VCM_VCC of five volts the access time is on the order of 16.5 milliseconds.

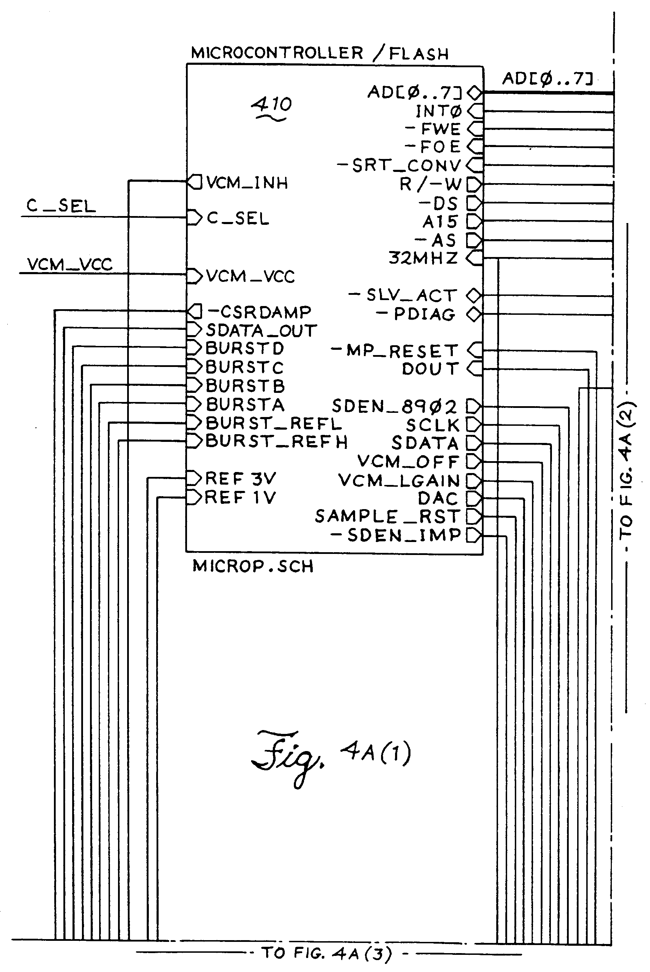

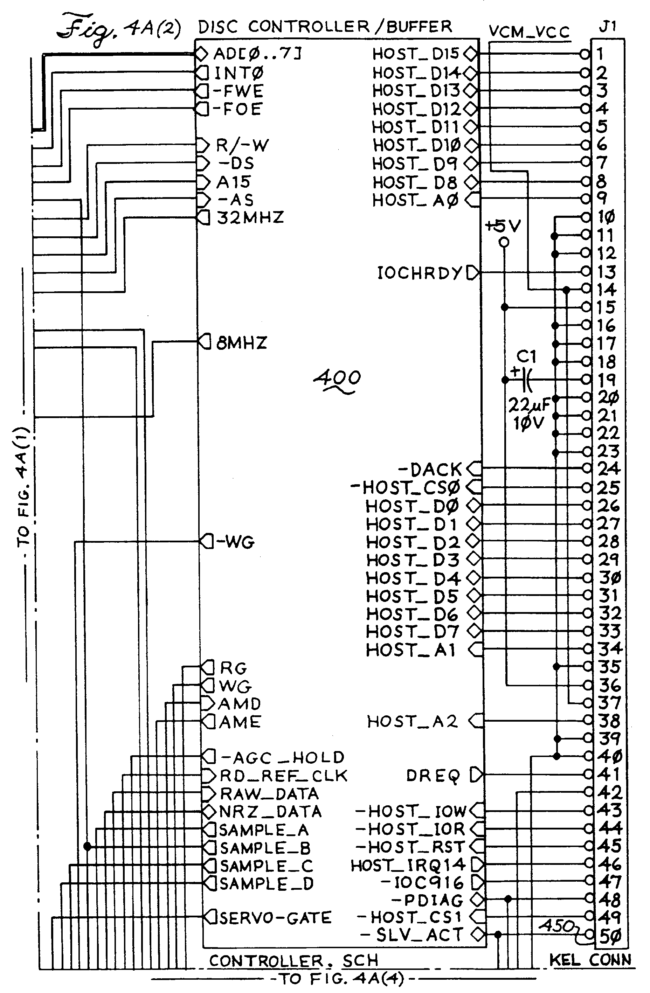

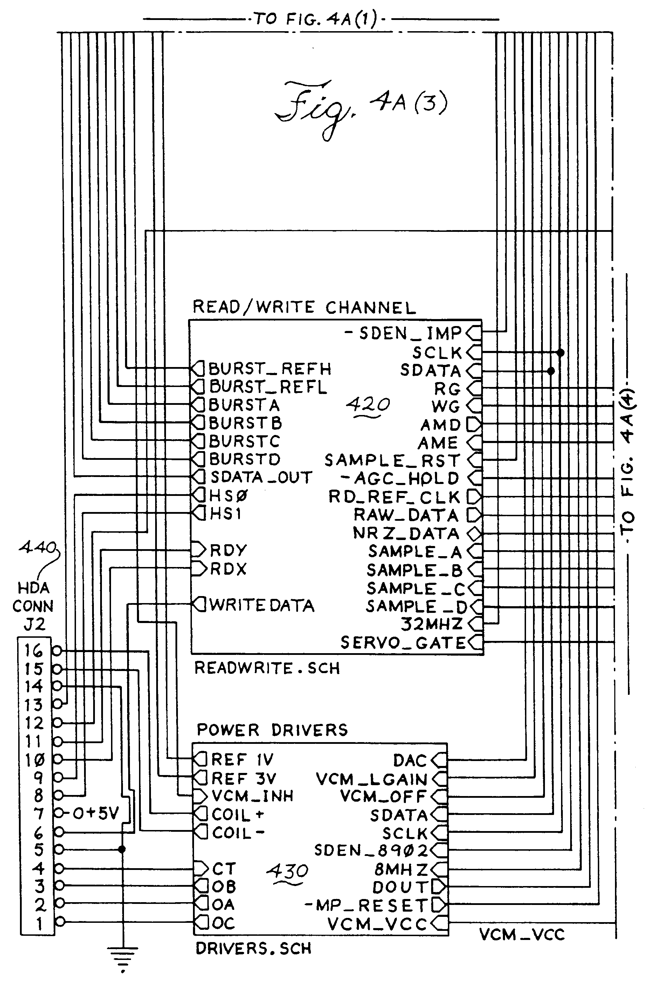

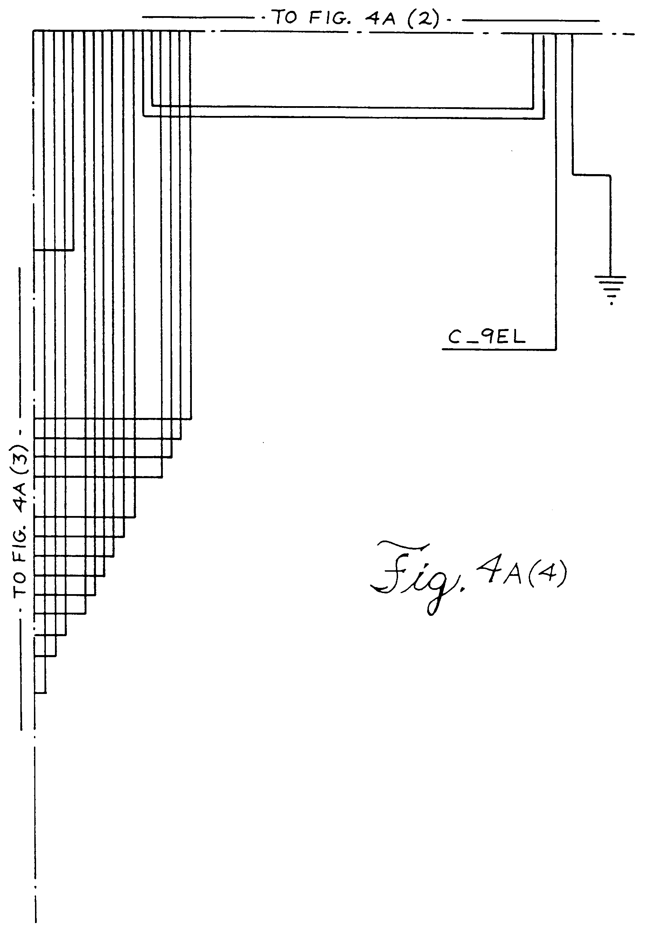

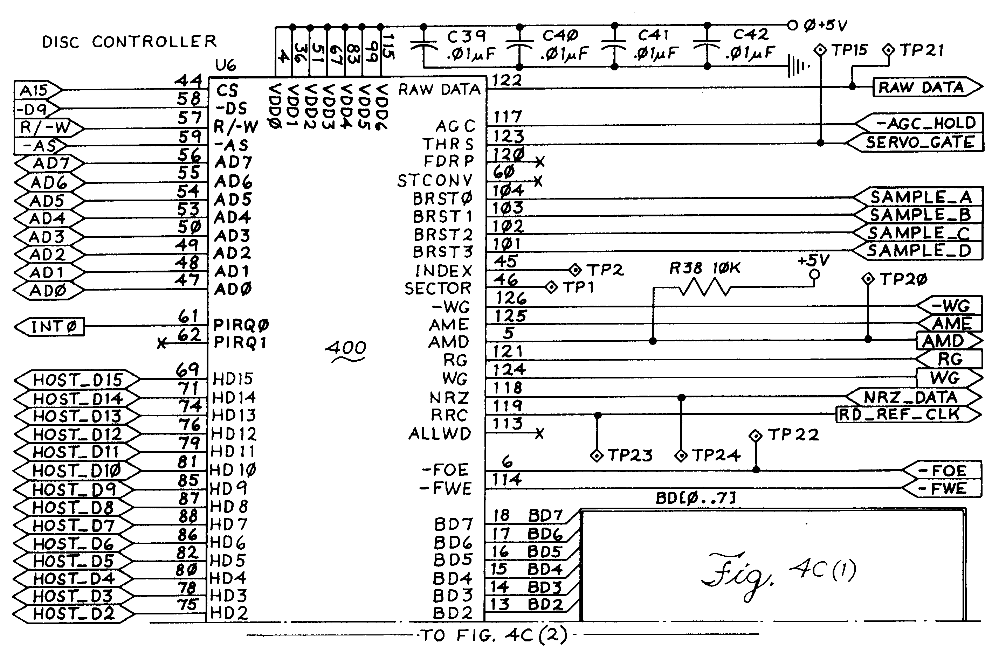

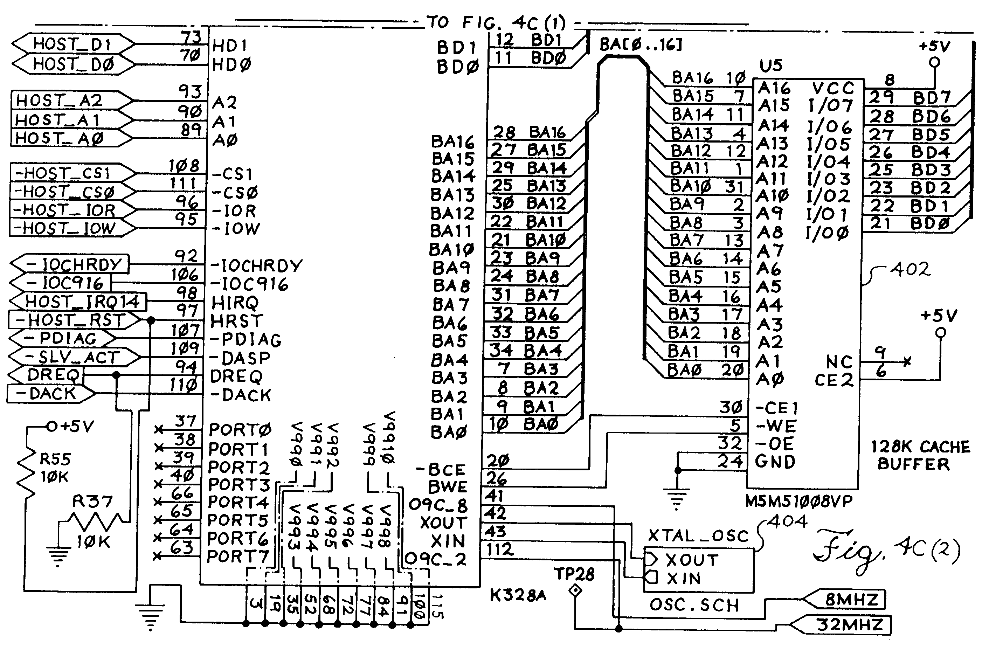

Referring next to Figures 4A-F, the circuitry for implementing the methodology of Figure 3 may be better understood. Figure 4A represents an overview of the circuit, and includes a disk controller 400, typically an ASIC, which communicates with a microcontroller 410, a read/write channel 420 and power drivers 430. Each of these devices communicates with the HDA, which connects at an HDA connector 440, while the disk controller 400 communicates with the host bus through a connector 450.

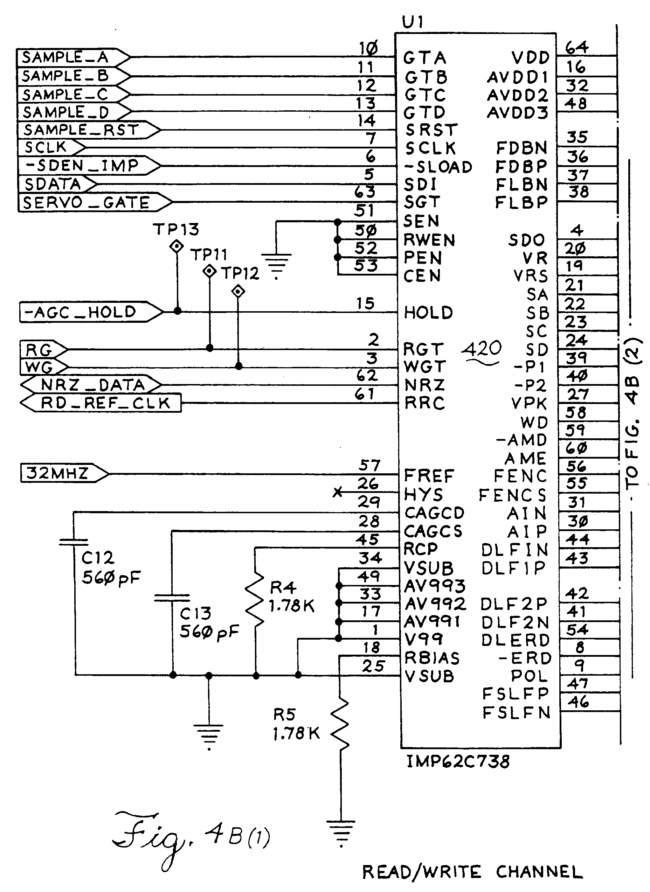

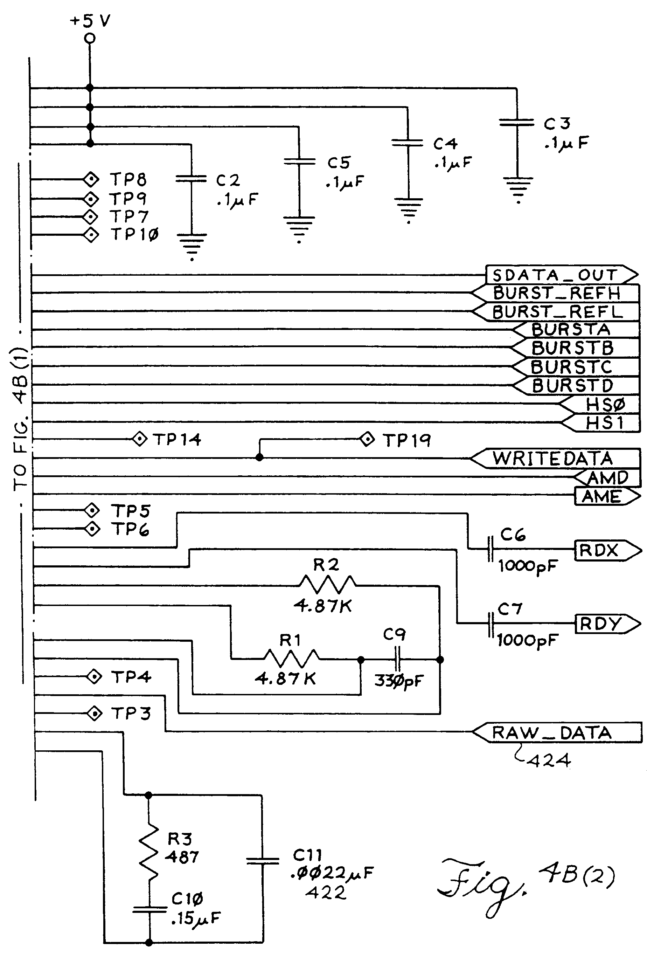

Referring next to Figure 4B, the read/write channel can be better understood, in which the read/write channel logic 420 is embodied in an IMP62C738 device. External to the channel logic are synthesizer and data separator phase locked loops 422 and 424, respectively.

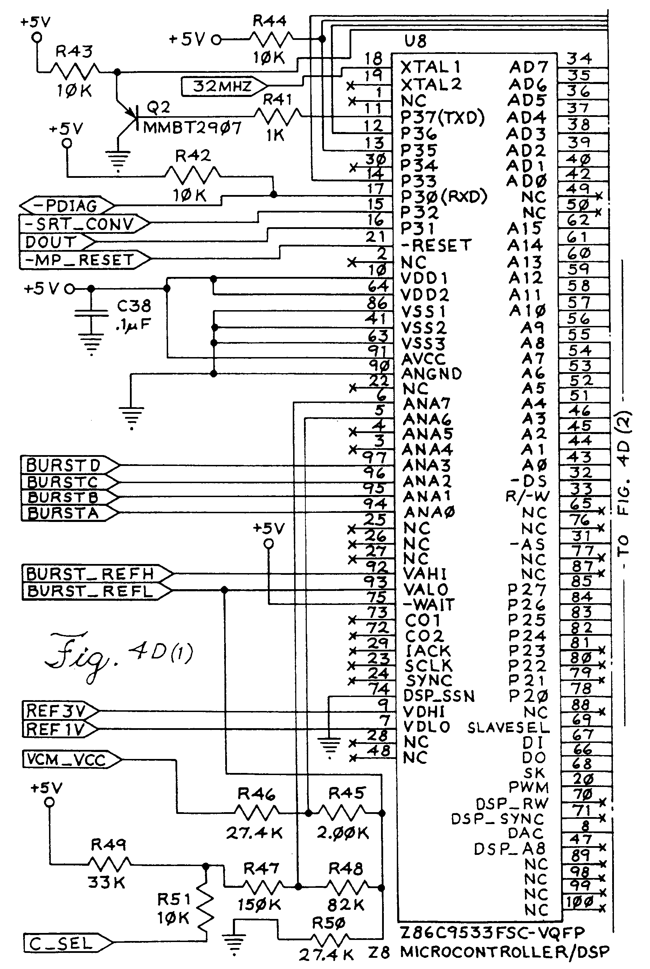

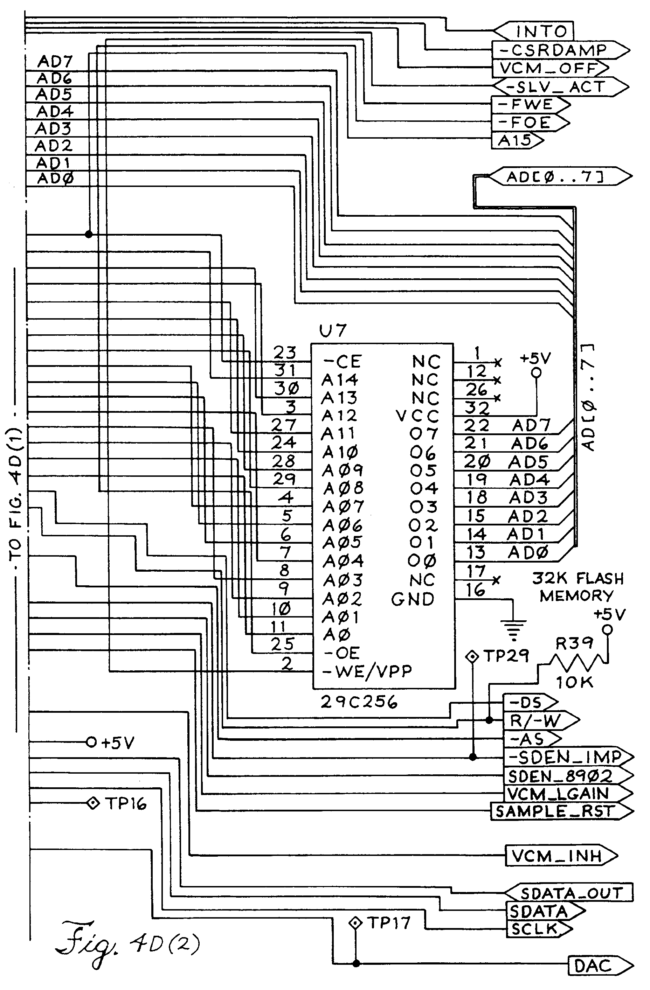

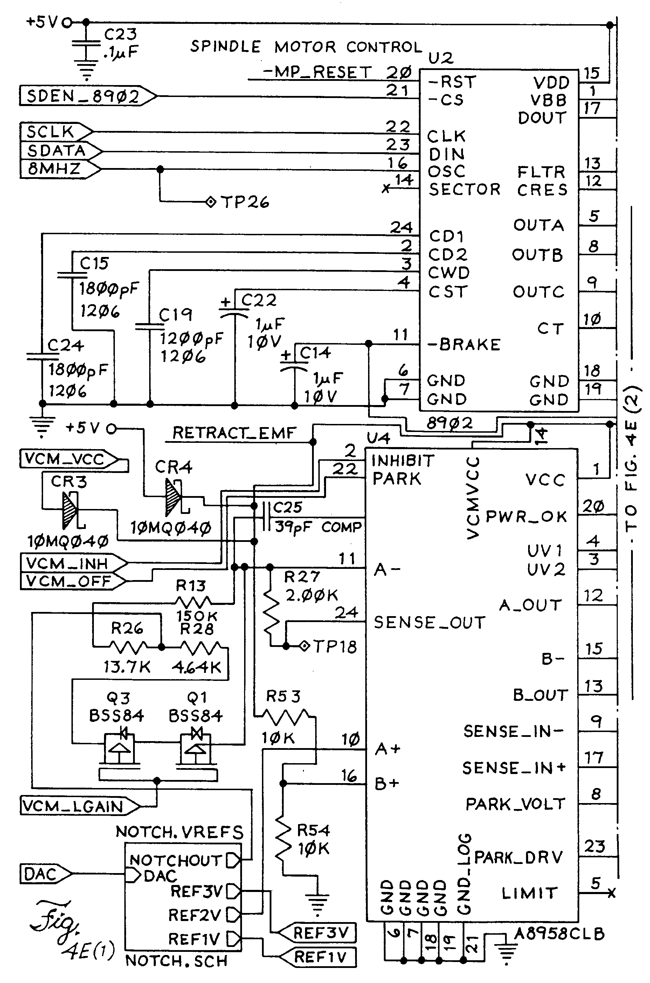

Referring next to Figure 4C, the disk controller 400 may be better appreciated. The disk controller 400 externally communicates with a cache RAM device 402 and an appropriate oscillator 404. Turning next to Figure 4D, the microcontroller/DSP, typically a Z86C95 or equivalent, receives sense data from the resistors R1 and R2 as discussed in connection with Figure 2, and provides Valid High and Valid Low signals VAHI and VALO. Servo error signals are provided on a DAC line, while data is buffered through a 29C256 device 412.

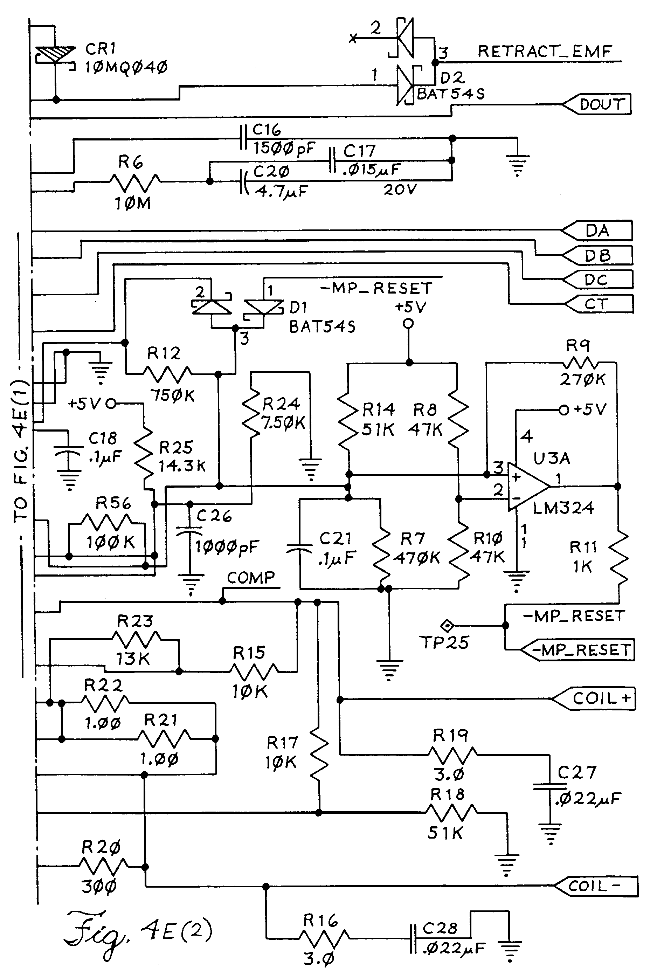

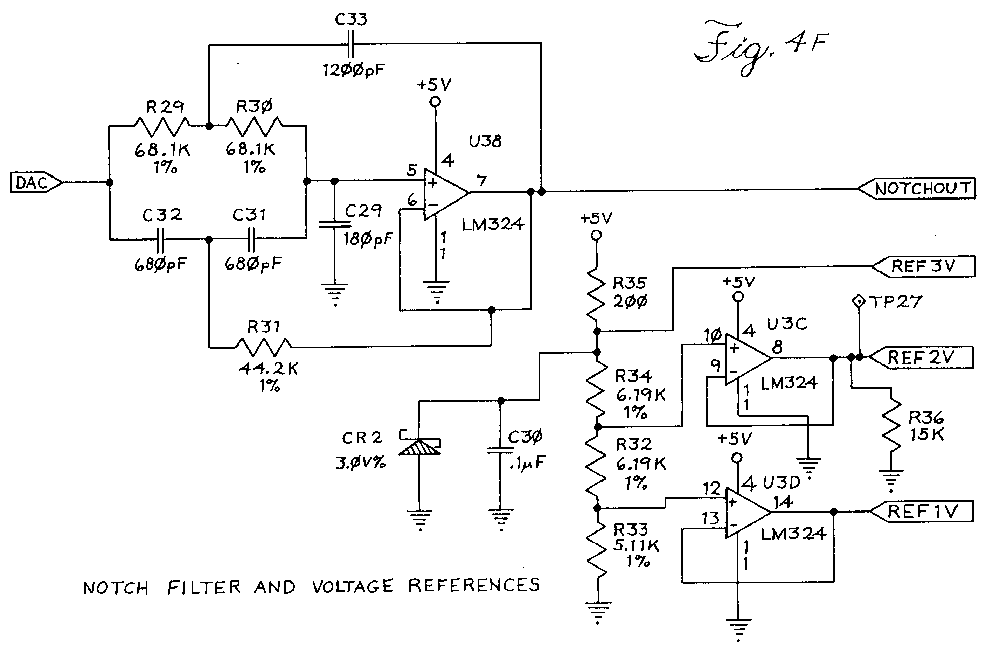

With regard to Figure 4E, the spindle motor logic is shown in greater detail. The motor phase signals are provided at lines OA-OC and CT, while a pair of zener diodes provide isolation between VCM_VCC and five volts. Figure 4F illustrates in detail a notch filter used to eliminate most of the mechanical resonance in the system, and also illustrates the circuitry for providing high and low reference values for the D/A converter.

## Claims

1. A hard disk drive data storage system (10) for use with a host computer system, said data storage system (10) comprising:-
at least one rotatable disk (80) upon which data can be stored;
a spindle motor (40) coupled to said disk to impart rotation thereto;
an actuator (50) including a motor (60) coupled to a set of heads (70) and operable to move said set of heads (70) across said at least one rotatable disk (80);
read/write logic (90) connected to said set of heads (70) for writing to and reading from said at least one disk (80);
a controller (30) coupled to and driving said spindle motor (40), said actuator (50), and said read/write logic (90); and an interface connector including a first power
supply line (102) through which said spindle motor (40) and said read/write logic (90) receive power at a first voltage from said host computer system and a second power supply line (100) through which said actuator (50) receives power at a second voltage (VCM_VCC) from said host computer system,
said controller (30) includes a voltage adapting circuit coupled to said second power supply line (100) such that said controller is adapted to operate said actuator (50) with a first set of operating parameters if said second voltage (VCM_VCC) matches said first voltage and to operate said actuator (50) with a second set of operating parameters if said second voltage(VCM_VCC) does not match said first voltage.

2. A system as claimed in claim 1, wherein said first voltage is a voltage level normally supplied by a portable computer and said second voltage is either a voltage level normally supplied by a portable computer or a higher voltage level normally supplied by a desktop computer.

3. A system as claimed in claim 1, wherein said first voltage is five volts and said second voltage is either five volts or twelve volts.

4. A system as claimed in claim 1, wherein the operating parameters include one of: a constant multiplier that determines actuator velocity feedback (TACH_GAIN), a velocity correction factor for the actuator during acceleration (V_LEAD), and a velocity correction factor for the actuator during deceleration (V_LAG).

5. A system as claimed in claim 1, wherein the voltage adapting circuit comprises an analog-to-digital converter (104) connected to the second power supply line (100) to receive a voltage signal and convert the received voltage signal into a digital voltage signal.

6. A system as claimed in claim 5, wherein the controller further comprises a digital signal processor (106) connected to receive the digital voltage signal from the analog-to-digital converter (104) and generate a scaled digital voltage signal in response.

7. A system as claimed in claim 6 further comprising a digital-to-analog converter (108) connected to receive the scaled digital voltage signal from the digital signal processor (106) and to generate an analog signal in response to the scaled digital signal.

8. A system as claimed in claim 1, wherein the controller (30) comprises a microcontroller.

9. A system as claimed in claim 1, wherein the actuator (50) can adapt to both a five volt host computer system and a twelve volt host computer system.

10. A system as claimed in claim 9, wherein the twelve volt host system comprises a desktop computer.

11. A system as claimed in claim 9, wherein the five volt host system comprises a portable computer.

12. A method of transferring data between desktop and portable computer systems using a removable hard disk drive (10) installable in both said desktop and said portable systems to act as an intermediate data store, said disk drive being driven by a power supply of the computer system in which it is installed, and said disk drive determines whether the voltage of said power supply is a typical voltage supplied by a portable system or the higher voltage supply of a desktop system and provides a performance characteristic in accordance therewith.

13. A method of transferring data as claimed in claim 12, wherein said typical voltage is five volts and said higher voltage is twelve volts.

14. A method of transferring data as claimed in claim 12 or 13, wherein said disk drive includes an actuator and said performance characteristic comprises driving said actuator utilising the highest available voltage of said power supply.

## Patentansprüche

1. Festplattenlaufwerk-Datenspeicherungssystem (10) zum Einsatz in einem Host-Rechner-System, wobei das Datenspeicherungssystem (10) umfaßt:
wenigstens eine drehbare Scheibe (80), auf der Daten gespeichert werden können;
einen Spindelmotor (40), der mit der Scheibe verbunden ist, um sie in Drehung zu versetzen;
ein Betätigungselement (50), das einen Motor (60) enthält, der mit einer Gruppe von Köpfen (70) verbunden ist und die Gruppe von Köpfen (70) über die Wenigstens eine drehbare Scheibe (80) bewegen kann;
eine Lese/Schreib-Logikschaltung (90), die mit der Gruppe von Köpfen (70) verbunden ist, um auf die wenigstens eine Scheibe (80) zu schreiben und von ihr zu lesen;
einen Controller (30), der mit dem Spindelmotor (40), dem Betätigungselement (50) und der Lese/Schreib-Logikschaltung (90) verbunden ist und sie ansteuert; und
einen Schnittstellenverbinder, der eine erste Stromversorgungsleitung (102) enthält, über die der Spindelmotor (40) und die Lese/Schreib-Logikschaltung (90) Strom mit einer ersten Spannung von dem Host-Rechner-System empfangen, sowie eine zweite Stromversorgungsleitung (100), über die das Betätigungselement (50) Strom mit einer zweiten Spannung (VCM_VCC) von dem Host-Rechner-System empfängt,
wobei der Controller (30) eine Spannungsanpassungsschaltung enthält, die mit der zweiten Stromversorgungsleitung (100) so verbunden ist, daß der Controller das Betätigungselement (50) mit einer ersten Gruppe von Betriebsparametern betreiben kann, wenn die zweite Spannung (VCM_VCC) der ersten Spannung entspricht, und das Betätigungselement (50) mit einer zweiten Gruppe von Betriebsparametern betreiben kann, wenn die zweite Spannung (VCM_VCC) der ersten Spannung nicht entspricht.

2. System nach Anspruch 1, wobei die erste Spannung ein Spannungspegel ist, der normalerweise von einem tragbaren Computer zugeführt wird, und die zweite Spannung entweder ein Spannungspegel ist, der normalerweise von einem tragbaren Computer zugeführt wird, oder ein höherer Spannungspegel, der normalerweise von einem Desktop-Computer zugeführt wird.

3. System nach Anspruch 1, wobei die erste Spannung 5 Volt und die zweite Spannung 5 Volt oder 12 Volt beträgt.

4. System nach Anspruch 1, wobei die Betriebsparameter einen der folgenden Parameter einschließen:
einen Festwert-Multiplizierer, der Betätigungselement-Geschwindigkeitsrück-kopplung (TACH_GAIN) bestimmt, einen Geschwindigkeitskorrekturfaktor für das Betätigungselement bei Beschleunigung (V-LEAD) sowie einen Geschwindigkeitskorrekturfaktor für das Betätigungselement bei Verlangsamung (V_LAG).

5. System nach Anspruch 1, wobei die Spannungsanpassungsschaltung einen Analog-Digital-Wandler (104) umfaßt, der mit der zweiten Stromversorgungsleitung (100) verbunden ist und ein Spannungssignal empfängt und das empfangene Spannungssignal in ein digitales Spannungssignal umwandelt.

6. System nach Anspruch 5, wobei der Controller des weiteren einen Digitalsignalprozessor (106) umfaßt, der so geschaltet ist, daß er das digitale Spannungssignal von dem Analog-Digital-Wandler (104) empfängt und in Reaktion darauf ein skaliertes digitales Spannungssignal erzeugt.

7. System nach Anspruch 6, das des weiteren einen Digital-Analog-Wandler (108) umfaßt, der so geschaltet ist, daß er das skalierte digitale Spannungssignal von dem Digitalsignalprozessor (106) empfängt und in Reaktion auf das skalierte digitale Signal ein analoges Signal erzeugt.

8. System nach Anspruch 1, wobei der Controller (30) einen Mikrocontroller umfaßt.

9. System nach Anspruch 1, wobei sich das Betätigungselement (50) sowohl an ein 5-Volt-Host-Rechner-System als auch an ein 12-Volt-Host-Rechner-System anpassen kann.

10. System nach Anspruch 9, wobei das 12-Volt-Host-Rechner-System einen Desktop-Computer umfaßt.

11. System nach Anspruch 9, wobei das 5-Volt-Host-System einen tragbaren Computer umfaßt.

12. Verfahren zum Übertragen von Daten zwischen einem Desktop- und einem tragbaren Computersystem unter Verwendung eines herausnehmbaren Festplattenlaufwerks (10), das sowohl in dem Desktop- als auch dem tragbaren System installiert werden kann, um als Zwischendatenspeicher zu dienen, wobei das Plattenlaufwerk von einer Stromversorgung des Computersystems angetrieben wird, in der es installiert wird, und das Plattenlaufwerk feststellt, ob die Spannung der Stromversorgung eine typische Spannung ist, die von einem tragbaren System zugeführt wird, oder die Versorgung eines Desktop-Systems mit höherer Spannung, und eine dementsprechende Leistungskenngröße erzeugt.

13. Verfahren zum Übertragen von Daten nach Anspruch 12, wobei die typische Spannung 5 Voll beträgt und die höhere Spannung 12 Volt beträgt.

14. Verfahren zum Übertragen von Daten nach Anspruch 12 oder 13, wobei das Plattenlaufwerk ein Betätigungselement enthält und die Leistungskenngröße das Ansteuern des Betätigungselementes unter Nutzung der am höchsten zur Verfügung stehenden Spannung der Stromversorgung umfaßt.

## Revendications

1. Système de mémorisation de données à lecteur de disque dur (10) destiné à être utilisé avec un système informatique hôte, ledit système de mémorisation de données (10) comportant :
au moins un disque rotatif (80) sur lequel peuvent être mémorisées des données,
un moteur à broche (40) couplé audit disque pour le mettre en rotation,
un actionneur (50) incluant un moteur (60) couplé à un ensemble de têtes (70) et pouvant agir pour déplacer ledit ensemble de têtes (70) à travers ledit au moins un disque rotatif (80),
un circuit logique de lecture/écriture (90) connecté audit ensemble de têtes (70) destiné à écrire sur ledit au moins un disque (80) et à lire à partir de celui-ci,
un contrôleur (30) couplé audit moteur à broche (40), audit actionneur (50), et audit circuit logique de lecture/écriture (90), et entraînant ceux-ci, et
un connecteur formant interface incluant une première ligne d'alimentation (102) par l'intermédiaire de laquelle ledit moteur à broche (40) et ledit circuit logique de lecture/écriture (90) reçoivent une énergie à une première tension provenant dudit système informatique hôte et une seconde ligne d'alimentation (100) par l'intermédiaire de laquelle ledit actionneur (50) reçoit une énergie à une seconde tension (VCM_VCC) provenant dudit système informatique hôte,
ledit contrôleur (30) inclut un circuit d'adaptation de tension couplé à ladite seconde ligne d'alimentation (100) de sorte que ledit contrôleur est adapté pour faire fonctionner ledit actionneur (50) avec un premier ensemble de paramètres de fonctionnement si ladite seconde tension (VCM_VCC) correspond à ladite première tension et faire fonctionner ledit actionneur (50) avec un second ensemble de paramètres de fonctionnement si ladite seconde tension (VCM_VCC) ne correspond pas à ladite première tension.

2. Système selon la revendication 1, dans lequel ladite première tension est un niveau de tension délivré normalement par un ordinateur portable et ladite seconde tension est un niveau de tension délivré normalement par un ordinateur portable ou un niveau de tension supérieur délivré normalement par un ordinateur de bureau.

3. Système selon la revendication 1, dans lequel ladite première tension est de cinq volts et ladite seconde tension est de cinq volts ou de douze volts.

4. Système selon la revendication 1, dans lequel les paramètres de fonctionnement incluent un des paramètres suivants : un multiplicateur constant qui détermine la rétroaction de vitesse de l'actionneur (TACH_GAIN), un facteur de correction de vitesse pour l'actionneur pendant une accélération (V_LEAD), et un facteur de correction de vitesse pour l'actionneur pendant une décélération (V_LAG).

5. Système selon la revendication 1, dans lequel le circuit d'adaptation de tension comporte un convertisseur analogique/numérique (104) connecté à la seconde ligne d'alimentation (100) de manière à recevoir un signal de tension et à convertir le signal de tension reçu en un signal de tension numérique.

6. Système selon la revendication 5, dans lequel le contrôleur comporte en outre un processeur de signaux numériques (106) connecté de manière à recevoir le signal de tension numérique provenant du convertisseur analogique/numérique (104) et à générer en réponse un signal de tension numérique normalisé.

7. Système selon la revendication 6, comportant en outre un convertisseur numérique/analogique (108) connecté de manière à recevoir le signal de tension numérique normalisé provenant du processeur de signaux numériques (106) et à générer un signal analogique en réponse au signal numérique normalisé.

8. Système selon la revendication 1, dans lequel le contrôleur (30) comporte un micro-contrôleur.

9. Système selon la revendication 1, dans lequel l'actionneur (50) peut s'adapter à la fois à un système informatique hôte à cinq volts et à un système informatique hôte à douze volts.

10. Système selon la revendication 9, dans lequel le système hôte à douze volts comporte un ordinateur de bureau.

11. Système selon la revendication 9, dans lequel le système hôte à cinq volts comporte un ordinateur portable.

12. Procédé de transfert de données entre des systèmes informatiques de bureau et portable utilisant un lecteur de disque dur amovible (10) pouvant être installé à la fois dans ledit système de bureau et ledit système portable pour agir en tant que mémoire de données intermédiaire, ledit lecteur de disque étant entraîné par une alimentation du système informatique dans lequel il est installé, et ledit lecteur de disque détermine si la tension de ladite alimentation est une tension classique délivrée par un système portable ou l'alimentation en tension supérieure d'un système de bureau, et fournit une caractéristique de performance conformément à celle-ci.

13. Procédé de transfert de données selon la revendication 12, dans lequel ladite tension classique est de cinq volts et ladite tension supérieure est de douze volts.

14. Procédé de transfert de données selon la revendication 12 ou 13, dans lequel ledit lecteur de disque comporte un actionneur et ladite caractéristique de performance comporte l'entraînement dudit actionneur en utilisant la plus grande tension disponible de ladite alimentation.
